# EUROPEAN PATENT APPLICATION

(11) **EP 3 299 429 A1**
(43) Date of publication of application: **28.03.2018**
(21) Application number: 16799929.1
(22) Date of filing: 19.05.2016
(51) Int. Cl.: C09D 177/00, C08L 77/00, C08L 95/00, C09D 5/00, C09D 7/12, C09D 195/00, E01C 7/00, E01D 19/08

(54) **MATERIAL FOR WATERPROOF LAYERS**

(30) Priority: 22.05.2015 JP 2015104720
(71) Applicant: Kao Corporation, Chuo-ku Tokyo 103-8210 (JP)
(72) Inventor: HASHIMOTO, Ryoichi, Wakayama-shi Wakayama 640-8580 (JP); OKUBO, Makoto, Wakayama-shi Wakayama 640-8580 (JP); MURAYAMA, Masato, Tokyo 106-0032 (JP); HIRATO, Toshiaki, Tokyo 106-0032 (JP)
(74) Representative: Hoffmann Eitle
(86) International application number: PCT/JP2016/064934
(87) International publication number: WO 2016/190223

(57) **Abstract**

The present invention relates to a material for waterproof layers used for a waterproof layer of a construction, the material for waterproof layers containing a polyamide resin, the polyamide resin having a softening point of 70°C or more and 170°C or less and a melt viscosity at 180°C of 100 mPa ·s or more and 9,000 mPa ·s or less, the polyamide resin being obtainable through condensation of a carboxylic acid component and an amine component.

## Description

### Field of the Invention

The present invention relates to a material for waterproof layers used for a waterproof layer of a construction.

### Background of the Invention

A construction, such as a building and a bridge, has waterproof implementation for preventing water from invading the interior of the construction from the roof or the outer wall of the construction. Examples of the waterproof implementation include an asphalt coated film waterproof construction method, an FRP coated film waterproof construction method, and a resin coated film waterproof construction method, which are performed depending on the construction site, the material constituting the construction, and the like.

In a road bridge as the construction, the asphalt coated film waterproof construction method among the above construction methods is often used from the standpoint of the construction cost, the construction period, and the adhesiveness between the floor slab and the asphalt pavement. In a road bridge, an asphalt pavement is constructed on a surface of a floor slab formed of a steel plate, concrete, or the like, and between the floor slab and the asphalt pavement, a waterproof layer is formed by an asphalt coated film waterproof construction method.

The asphalt coated film waterproof construction method includes: a method using a heated asphalt compound as a material for waterproof layers, in which the asphalt compound is coated on a surface of a floor slab to a thickness of approximately from 1 to 2 mm to form an asphalt compound film; an asphalt sheet flow adhesion method using an asphalt sheet having a thickness of approximately from 1 to 3 mm formed in a factory in advance containing a nonwoven fabric or a woven fabric impregnated with an asphalt compound, in which the asphalt sheet is adhered to a floor slab while a heated and melted asphalt compound is made to flow between the asphalt sheet and the floor slab (see JP-A-2001-32203); and the like.

As the material for waterproof layers used in these asphalt coated film waterproof construction methods, a material obtained through modification of a straight asphalt by adding thereto a thermoplastic elastomer has been proposed.

### Summary of the Invention

The present invention relates to a material for waterproof layers used for a waterproof layer of a construction, the material for waterproof layers containing a polyamide resin, the polyamide resin having a softening point of 70°C or more and 170°C or less and a melt viscosity at 180°C of 100 mPa ·s or more and 9,000 mPa ·s or less, the polyamide resin being obtainable through condensation of a carboxylic acid component and an amine component.

### Brief Description of the Drawing

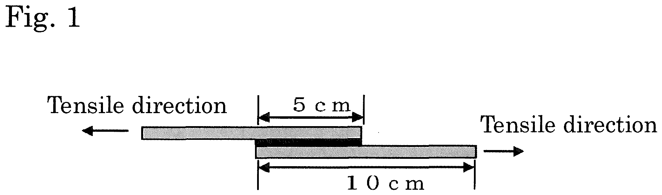

Fig. 1 is a side view of a specimen subjected to a shearing test for a material for waterproof layers.

### Detailed Description of the Invention

The thermoplastic elastomer used in the aforementioned ordinary material for waterproof layers is a viscoelastic substance and thus is lowered in adhesion strength at a higher temperature. A surface of a road bridge may be at approximately -10°C in winter season and may exceed 50°C to reach approximately 60°C in daytime in summer season. In the case where the material for waterproof layers is constructed between the floor slab of the road bridge and the asphalt pavement, in particular, the adhesion strength tends to be lowered, and there may be concerns that the durable period thereof is decreased due to such phenomena that the waterproof layer is shifted by shearing forces due to breaking forces of vehicles, and causes cracking due to the shift thereof along with the asphalt pavement constructed on the waterproof layer, and invading rain water forms partial detachments of the asphalt pavement, which grow to potholes.

As described above, the material for waterproof layers used for the asphalt coated film waterproof has been demanded to be further improved for enabling the application thereof to a floor slab of a road bridge, and the like under severe temperature and traffic conditions.

The present invention relates to a material for waterproof layers that has an excellent shear strength at a high temperature without impairing the shear strength at a low temperature, and also has an excellent construction suitability. The low temperature herein means a temperature of -10°C or less, and the high temperature herein means a temperature of 60°C or more.

The present inventors have found that the aforementioned problems can be solved by using the particular polyamide resin as a single material or a mixture obtained by mixing the particular polyamide resin with an asphalt compound. Accordingly, the present invention relates to the following items [1] to [3].
[1] A material for waterproof layers used for a waterproof layer of a construction, the material for waterproof layers containing a polyamide resin, the polyamide resin having a softening point of 70°C or more and 170°C or less and a melt viscosity at 180°C of 100 mPa ·s or more and 9,000 mPa ·s or less, the polyamide resin being obtainable through condensation of a carboxylic acid component and an amine component.
[2] A method for forming a waterproof layer, containing disposing the material for waterproof layers according to the item [1] between a floor slab of a road bridge and a pavement mixture constructed on the floor slab.
[3] Use of the material for waterproof layers according to the item [1], containing disposing the material for waterproof layers between a floor slab of a road bridge and a pavement mixture constructed on the floor slab.

According to the present invention, a material for waterproof layers can be provided that has an excellent shear strength at a high temperature and a low temperature, and also has an excellent construction suitability.

In the material for waterproof layers according to the present invention, the waterproof layer is disposed on a roof of a construction, such as a building and a bridge, for preventing water from externally invading the interior of the construction. The material for waterproof layers means a material that is for forming the waterproof layer.

In the present invention, embodiments in the case where the construction is a road bridge are mainly described. In a road bridge, an asphalt pavement is constructed on a surface of a floor slab formed of a steel plate, concrete, or the like, and the waterproof layer is formed between the floor slab and the asphalt pavement.

### [Material for Waterproof Layers]

The material for waterproof layers according to the present invention is a material for waterproof layers used for a waterproof layer of a construction, the material for waterproof layers contains a polyamide resin, the polyamide resin has a softening point of 70°C or more and 170°C or less and a melt viscosity at 180°C of 100 mPa ·s or more and 9,000 mPa ·s or less, and the polyamide resin is obtained through condensation of a carboxylic acid component and an amine component.

It is considered that the reason why the use of the polyamide resin having the particular property provides a good shear strength over a range of from a low temperature to a high temperature is that the amide bonds contained in the polyamide resin are readily adsorbed to the floor slab formed of a steel plate, concrete, or the like, and the aggregate and the like contained in the asphalt pavement, and can firmly adhere these materials over a range of from a low temperature to a high temperature.

In the description herein, the shear strength at a high temperature is a shear stress based on the shear test result at 60°C measured with a test specimen shown in the examples described later. The shear strength at a low temperature herein is a shear stress based on the shear test result at -10°C measured according to the method shown in Handbook for Road Bridge Floor Slab Waterproofing described in the examples described later. The waterproof performance herein means the waterproof performance of Waterproof Test II measured according to the method shown in Handbook for Road Bridge Floor Slab Waterproofing described in the examples described later.

One of the features of the material for waterproof layers according to the present invention is the use of a polyamide resin having a softening point and a melt viscosity that are in the particular ranges, and the material for waterproof layers itself also preferably has a softening point and a melt viscosity in the following ranges.

Specifically, the softening point of the material for waterproof layers is preferably 70°C or more, more preferably 75°C or more, and further preferably 77°C or more, from the standpoint of providing a good shear strength at a high temperature, and is preferably 170°C or less, more preferably 150°C or less, further preferably 130°C or less, further preferably 120°C or less, further preferably 110°C or less, further preferably 100°C or less, and further preferably 90°C or less, from the standpoint of providing a good shear strength at a low temperature.

An asphalt concrete constructed on the waterproof layer is generally constructed at a temperature of approximately 150°C, and it is considered that in the case where the softening point of the material for waterproof layers is 170°C or less, the polyamide resin is melted with the heat of the asphalt concrete to exhibit an adhesion force, which provides an excellent shear strength at a low temperature.

The melt viscosity at 180°C of the material for waterproof layers is preferably 100 mPa ·s or more, more preferably 200 mPa ·s or more, further preferably 300 mPa ·s or more, further preferably 500 mPa ·s or more, further preferably 800 mPa ·s or more, further preferably 1,000 mPa ·s or more, further preferably 1,500 mPa ·s or more, from the standpoint of providing a good shear strength at a low temperature, and is preferably 9,000 mPa ·s or less, more preferably 5,000 mPa ·s or less, further preferably 4,000 mPa ·s or less, and further preferably 2,500 mPa ·s or less, from the standpoint of providing a good shear strength, a good construction suitability, and a good waterproof performance.

The material for waterproof layers according to the present invention contains the polyamide resin, and may further contain an asphalt. The material for waterproof layers may also contain a resin, a rubber component, an additive, and the like that are contained in an ordinary asphalt mixture.

The content of the polyamide resin in the material for waterproof layers is preferably 10% by mass or more, more preferably 20% by mass or more, further preferably 30% by mass or more, further preferably 40% by mass or more, further preferably 50% by mass or more, further preferably 60% by mass or more, further preferably 70% by mass or more, further preferably 80% by mass or more, further preferably 90% by mass or more, and further preferably 95% by mass or more, and is preferably 100% by mass or less, and further preferably 100% by mass, from the standpoint of enhancing the shear strength at a low temperature and a high temperature.

In the case where the material for waterproof layers further contains an asphalt, the total content of the polyamide resin and the asphalt mixture containing the asphalt in the material for waterproof layers is preferably 80% by mass or more, more preferably 90% by mass or more, further preferably 95% by mass or more, and further preferably 99% by mass or more, and is preferably 100% by mass or less, and further preferably 100% by mass, from the standpoint of an excellent shear strength at a low temperature and a high temperature.

The polyamide resin and the asphalt mixture that can constitute the material for waterproof layers according to the embodiment will be described in detail below.

### [Polyamide Resin]

### <Property of Polyamide Resin>

The polyamide resin that can be applied to the material for waterproof layers according to the present invention will be described. The softening point of the polyamide resin is 70°C or more, preferably 75°C or more, and more preferably 77°C or more, from the standpoint of providing a good shear strength at a high temperature, and is 170°C or less, preferably 150°C or less, more preferably 130°C or less, further preferably 120°C or less, further preferably 110°C or less, further preferably 100°C or less, and further preferably 90°C or less, from the standpoint of providing a good shear strength at a low temperature.

For the polyamide resin that can be applied to the material for waterproof layers according to the present invention, the melt viscosity at 180°C thereof is 100 mPa ·s or more, preferably 200 mPa ·s or more, more preferably 300 mPa ·s or more, further preferably 500 mPa ·s or more, further preferably 800 mPa ·s or more, further preferably 1,000 mPa ·s or more, further preferably 1,500 mPa ·s or more, from the standpoint of providing a good shear strength at a low temperature, and is 9,000 mPa ·s or less, preferably 5,000 mPa ·s or less, more preferably 4,000 mPa ·s or less, and further preferably 2,500 mPa ·s or less, from the standpoint of providing a good shear strength, a good construction suitability, and a good waterproof performance.

The softening point and the melt viscosity of the polyamide resin can be controlled by the composition of the carboxylic acid and the composition of the amine as raw materials of the polyamide resin as described below.

### <Structure of Polyamide Resin>

The polyamide resin used may be a polyamide resin having any chemical structure that is a polymer compound having an amide bond (-CONH-). The polyamide resin may be, for example, nylon having mainly an aliphatic skeleton or aramid having mainly an aromatic skeleton, and may be any material having a skeleton structure other than these skeletons. Examples of the structure preferably used include a polyamide formed of a diamine and a monocarboxylic acid, a dicarboxylic acid, or a polymerized fatty acid.

The polyamide resin is generally obtained through ring-opening polymerization reaction of a cyclic lactam, self-condensation reaction of an amino acid or a derivative thereof, polycondensation reaction of a carboxylic acid component and an amine component, and the like. For example, the polyamide resin can be obtained by performing condensation (polycondensation) reaction of a carboxylic acid component and an amine component.

As the carboxylic acid component as one of the raw materials for the polycondensation reaction, a monocarboxylic acid, a dicarboxylic acid, and a polymerized fatty acid are preferably used.

Examples of the monocarboxylic acid include acetic acid, propionic acid, butyric acid, valeric acid, lauric acid, palmitic acid, stearic acid, arachidic acid, and behenic acid. Examples of the unsaturated aliphatic monocarboxylic acid include oleic acid, linoleic acid, linolenic acid, eicosenoic acid, erucic acid, and a mixed fatty acid obtained from a natural fat or oil (such as a tall oil fatty acid, a rice bran fatty acid, a soybean fatty acid, and a beef tallow fatty acid). These compounds may be used solely or as a combination of two or more kinds thereof.

Examples of the dicarboxylic acid include adipic acid, sebacic acid, dodecanedioic acid, phthalic acid, isophthalic acid, terephthalic acid, succinic acid, and an alkenylsuccinic acid. The alkenylsuccinic acid preferably has an alkenyl group having a number of carbon atoms of from 4 to 20.

The polymerized fatty acid is a polymerized product obtained by polymerizing a monobasic fatty acid having an unsaturated bond, or a polymerized product obtained by polymerizing an esterified product of a monobasic fatty acid having an unsaturated bond. Examples of the polymerized fatty acid include a structure obtained through dehydration condensation reaction of a dimer acid derived from a vegetable oil or fat.

The monobasic fatty acid having an unsaturated bond used is generally an unsaturated fatty acid having from 1 to 3 unsaturated bonds having a total number of carbon atoms of from 8 to 24. Examples of the unsaturated fatty acid include oleic acid, linoleic acid, linolenic acid, a natural drying oil fatty acid, and a natural semidrying oil fatty acid. Examples of the ester of a monobasic fatty acid having an unsaturated bond include esters of the aforementioned monobasic fatty acids having an unsaturated bond and an aliphatic alcohol, preferably an aliphatic alcohol having a number of carbon atoms of from 1 to 3.

The polymerized fatty acid, which is a polymerized product obtained by polymerizing a monobasic fatty acid having an unsaturated bond, or a polymerized product obtained by polymerizing an esterified product of a monobasic fatty acid having an unsaturated bond, preferably contains a dimer as a major component. For example, as a polymerized product of an unsaturated fatty acid having a number of carbon atoms of 18, a product having a composition containing from 0 to 10% by mass of a monobasic acid having a number of carbon atoms of 18 (i.e., a monomer), from 60 to 99% by mass of a dibasic acid having a number of carbon atoms of 36 (i.e., a dimer), and 30% by mass or less of a tribasic acid having a number of carbon atoms of 54 and higher basic acids (i.e., a trimer and higher polymers) is available as a commercial product.

As the carboxylic acid component, in addition to the monocarboxylic acid, the dicarboxylic acid, and the polymerized fatty acid, a compound having a carboxylic acid other than these may be added in such a range that does not impair the property of the pavement mixture.

In the carboxylic acid component, a combination of the monocarboxylic acid and the polymerized fatty acid is particularly preferably used. The carboxylic acid group may be an ester with an alcohol having a number of carbon atoms of from 1 to 3.

In the case where the monocarboxylic acid and the polymerized fatty acid constituting the carboxylic acid component are used in combination, from the standpoint of controlling the softening point and the melt viscosity at 180°C of the polyamide resin to enhance the shear strength at a low temperature and a high temperature, the mixing ratios thereof are preferably 0% by molar equivalent or more and 50% by molar equivalent or less for the monocarboxylic acid and 50% by molar equivalent or more and 100% by molar equivalent or less for the polymerized fatty acid, more preferably 0% by molar equivalent or more and 35% by molar equivalent or less for the monocarboxylic acid and 65% by molar equivalent or more and 100% by molar equivalent or less for the polymerized fatty acid, and further preferably 0% by molar equivalent or more and 20% by molar equivalent or less for the monocarboxylic acid and 80% by molar equivalent or more and 100% by molar equivalent or less for the polymerized fatty acid, based on the total amount of the carboxylic acid component.

The mixing ratios are also preferably 5% by molar equivalent or more and 18% by molar equivalent or less for the monocarboxylic acid and 82% by molar equivalent or more and 95% by molar equivalent or less for the polymerized fatty acid, and more preferably 6% by molar equivalent or more and 15% by molar equivalent or less for the monocarboxylic acid and 85% by molar equivalent or more and 94% by molar equivalent or less for the polymerized fatty acid.

Examples of the amine component as the other one of the raw materials for the polycondensation reaction include a polyamine, an aminocarboxylic acid, and an aminoalcohol. Examples of the polyamine include an aliphatic diamine, such as ethylenediamine, hexamethylenediamine, and propylene diamine, an aliphatic triamine, such as diethylenetriamine, an aromatic diamine, such as xylylenediamine and diphenylmethanediamine, and an alicyclic diamine, such as piperazine and isophoronediamine. Examples of the aminocarboxylic acid include methylglycine, trimethylglycine, 6-aminocaproic acid, δ-aminocaprylic acid, and ε-caprolactam. Examples of the aminoalcohol include ethanolamine and propanolamine.

As the amine component, an amine component containing the polyamine, preferably an amine component containing two or more kinds of diamines of the aforementioned amine components may be used. As the amine component, an amine component containing two or more kinds of aliphatic diamines of the aforementioned amine components may be further preferably used.

In the polyamide resins obtained through condensation of the carboxylic acid components and the amine components, such a polyamide resin can be easily found that satisfies the characteristics required for the polyamide resin used in the present invention, such as the molecular weight, the molecular weight distribution, the softening point, and the melt viscosity.

The softening point and the melt viscosity of the polyamide resin can be controlled mainly by the charging ratio of the monocarboxylic acid to the other carboxylic acids including the carboxylic acid component containing the polymerized fatty acid and the like. As described in the foregoing, by decreasing the charging ratio of the monocarboxylic acid and increasing the charging ratio of the polymerized fatty acid, the softening point may be increased, and there is also a tendency that the melt viscosity is increased.

The softening point and the melt viscosity of the polyamide resin can also be controlled by using the amine components having different structures in combination. The polyamide that is obtained by using two or more kinds of the amine components having different structures in combination can have a decreased melt viscosity as compared to the polyamide that is obtained by using a single amine. It is considered that this is because the intermolecular amide bonding force is decreased. The polyamide that is obtained by using a single amine may show a high softening point, and the polyamide that is obtained by using two or more kinds of the amine components having difference structures in combination can have a decreased softening point.

The amine component is preferably the amine component containing two or more kinds of the polyamines, more preferably the amine component containing two or more kinds of the aromatic or aliphatic diamines, and further preferably the amine component containing two or more kinds of the aliphatic diamines, and the polyamide resin obtained therewith may be particularly excellent in the aforementioned performances and may be excellent since the shear strength of the material for waterproof layers at a low temperature is further increased.

The polyamine contained in the amine component used with the carboxylic acid component may be a diamine, such as an aliphatic diamine and an aromatic diamine. As another amine component, a monoamine and a polyamine, such as a triamine and a tetramine, that are commercially available may be used in combination with the diamine in such a range that achieves the preferred ranges for the melt viscosity at 180°C and the softening point.

From the standpoint of providing the melt viscosity at 180°C and the softening point that are preferred for the polyamide resin, the mixing ratios of the polyamines in the amine component are preferably 0% by molar equivalent or more and 100% by molar equivalent or less for the aliphatic diamine and 0% by molar equivalent or more and 20% by molar equivalent or less for the aromatic diamine, and more preferably 50% by molar equivalent or more and 100% by molar equivalent or less for the aliphatic diamine and 0% by molar equivalent or more and 10% by molar equivalent or less for the aromatic diamine, based on the total amount of the amine component.

From the standpoint of providing the melt viscosity at 180°C and the softening point that are preferred for the polyamide resin, the amine component is preferably the aliphatic diamine, and the aliphatic diamine used is preferably ethylenediamine and hexamethylenediamine. From the standpoint of providing the optimum softening point, the amounts thereof are preferably 30% by molar equivalent or more and 70% by molar equivalent or less for ethylenediamine and 30% by molar equivalent or more and 70% by molar equivalent or less for hexamethylenediamine, and more preferably 40% by molar equivalent or more and 60% by molar equivalent or less for ethylenediamine and 40% by molar equivalent or more and 60% by molar equivalent or less for hexamethylenediamine, based on the total amount of the amine component.

The aliphatic diamine is preferably an aliphatic diamine having a number of carbon atoms of from 2 to 6, and examples thereof include ethylenediamine, propylenediamine, butylenediamine, and hexamethylenediamine. The aromatic diamine used may be xylylenediamine, diaminodiphenyl ether, diaminodiphenylsulfone, and methylenebischloroaniline. In the present invention, it is particularly preferred to use two or more kinds of the aforementioned amines in combination, which enables the control of the orientation of the amide groups of the polyamide molecules, so as to decrease the crystallinity and the intermolecular mutual interaction, and thereby the softening point and the melt viscosity at 180°C can be easily prepared. Among these, two or more kinds selected from ethylenediamine, hexamethylenediamine, and m-xylylenediamine are preferably contained.

The polyamide resin can be produced through condensation reaction of the aforementioned raw material compounds under known reaction conditions. For example, the carboxylic acid component and the amine component, such as the polyamine compound, may be mixed at a molar equivalent ratio (carboxylic acid group/amino group) of from 1.0/1.2 to 1.2/1.0, and condensation reaction thereof may be performed by heating to a temperature, for example, of from 180 to 250°C.

### [Asphalt Mixture]

For the case where the material for waterproof layers according to the embodiment contains the polyamide resin and an asphalt mixture, a usable asphalt mixture will be specifically described.

The usable asphalt mixture in the embodiment may be a material containing a straight asphalt, which is petroleum asphalt for pavement, as a major component, or a modified asphalt obtained through modification of the straight asphalt by adding thereto a thermoplastic elastomer, such as a styrene-butadiene block copolymer (SBS), a styrene-isoprene block copolymer (SIS), and an ethylene-vinyl acetate copolymer (EVA).

Asphalt according to JIS K2207 (1996) or the Standard of Japan Modified Asphalt Association can be used. Regenerated asphalt that is regenerated from a pavement binder and an aggregate contained in an existing asphalt pavement can also be used.

The asphalt mixture according to the embodiment may contain a resin, a rubber component, an additive, and the like that are contained in an ordinary asphalt mixture.

In the asphalt mixture, the content of the thermoplastic elastomer is preferably 3% by mass or more, more preferably 5% by mass or more, and further preferably 7% by mass or more, from the standpoint of the enhancement of the adhesion strength, and is preferably 25% by mass or less, more preferably 20% by mass or less, and further preferably 15% by mass or less, from the same standpoint.

### <Mixing Ratio for Combination Use of Polyamide Resin and Asphalt Mixture>

In the case where the material for waterproof layers according to the embodiment contains the polyamide resin and the asphalt mixture, the mixing ratio of the polyamide resin is preferably 5% by mass or more based on the total mass of the polyamide resin and the asphalt mixture from the standpoint of providing a good shear strength at a low temperature and a high temperature.

Specifically, the value of (polyamide resin)×100/((polyamide resin)+(asphalt mixture)) (% by mass) is preferably 5% by mass or more, more preferably 10% by mass or more, further preferably 20% by mass or more, further preferably 30% by mass or more, further preferably 40% by mass or more, further preferably 50% by mass or more, further preferably 60% by mass or more, further preferably 70% by mass or more, further preferably 80% by mass or more, and further preferably 90% by mass or more, from the standpoint of providing a good shear strength at a low temperature and a high temperature.

### [Method for forming Waterproof Layer with Material for Waterproof Layers]

The method for forming a waterproof layer with the material for waterproof layers according to the present invention will be described.

In the case where the material for waterproof layers is formed of the aforementioned polyamide resin as a single material, the polyamide resin may be provided in such a manner that the polyamide resin is formed into a block form, a sheet form, a flake form, or a pellet form, in a factory or the like in advance.

In the case where the material for waterproof layers according to the embodiment is constructed on a floor slab of a road bridge, the material for waterproof layers formed of the polyamide resin as a single material in a flake form or a pellet form is placed in a melting oven on a construction site and melted by heating to a temperature of approximately 180°C, and the molten material is coated with a rake, a brush, or the like, on the surface of the floor slab of the road bridge.

In the case where the material for waterproof layers is formed of the polyamide resin and the asphalt mixture, the material for waterproof layers may be provided in such a manner that the polyamide resin and the asphalt mixture are mixed under heating, and molded into a block form or a sheet form of approximately from several kilograms to 10 kg, followed by cooling, in a factory or the like in advance.

In the case where the material for waterproof layers according to the embodiment is constructed on a floor slab of a road bridge, the material for waterproof layers molded into a block form or a sheet form of approximately from several kilograms to 10 kg is placed in a melting oven on a construction site and melted by heating to a temperature of approximately 200°C, and the molten material is coated with a rake, a brush, or the like, on the surface of the floor slab of the road bridge.

The polyamide resin is insoluble in a petroleum-based solvent, and thus is also insoluble in asphalt. Therefore, in the case where the material for waterproof layers formed of the polyamide resin and the asphalt mixture has a content of the polyamide resin exceeding 50% by mass, the asphalt mixture is dispersed in the polyamide resin. In the case where the content of the polyamide resin is 5% by mass or more and less than 50% by mass, on the other hand, the polyamide resin is dispersed in the asphalt mixture.

The dispersed state of the material for waterproof layers in a molten state can be retained for approximately from 2 to 3 hours without agitation, and thus the polyamide resin and the asphalt mixture can be formed into a block form or a sheet form with a good dispersion state thereof retained.

In the case where the material for waterproof layers according to the present invention is constructed on a floor slab of a road bridge, a primer layer appropriate to the material of the floor slab may be formed before coating the material for waterproof layers on the floor slab. Examples of the material capable of being applied to the primer layer include an asphalt solvent-based material, a petroleum resin solvent-based material, an epoxy resin-based material, a urethane resin-based material, and a methacrylic resin-based material. These materials may be used appropriately depending on the kind of the floor slab, the condition of the surface of the floor slab, the demanded waterproof performance, and the like.

In both the case where the material for waterproof layers is formed of the aforementioned polyamide resin as a single material and the case where the material for waterproof layers is formed of the polyamide resin and the asphalt mixture, the amount thereof coated on the floor slab is desirably 0.5 kg/m² or more and 5.0 kg/m² or less. When the amount thereof coated is 0.5 kg/m² or more, a sufficient waterproof performance can be imparted to the floor slab, and when the amount thereof coated is 5.0 kg/m² or less, and more preferably 3.0 kg/m² or less, the deformation resistance of the waterproof layer and the adhesiveness at the interface between the floor slab and an asphalt pavement may not be lowered.

In the case where the material for waterproof layers according to the present invention is constructed on a floor slab of a road bridge, an asphalt pavement is generally constructed on the material for waterproof layers. The pavement mixture used for the asphalt pavement is leveled off after heating to 150°C or more in the construction process. Therefore, when the heated pavement mixture is in contact with the material for waterproof layers formed of the polyamide resin as a single material or the material for waterproof layers formed of the polyamide resin and the asphalt mixture, the material for waterproof layer is immediately melted through heat exchange therewith. According to the mechanism, when the pavement mixture is compacted with a roller in the construction process, the molten material for waterproof layers can be fixed to the floor slab and the pavement mixture at the interface between the floor slab and the pavement mixture. Consequently, the material for waterproof layer according to the embodiment forms an adhesive layer having a waterproof performance.

In relation to the embodiments described above, the present invention relates to the materials for waterproof layers, the methods for forming a waterproof layer, and the use of a material for waterproof layers are shown below.
<1> A material for waterproof layers used for a waterproof layer of a construction, the material for waterproof layers containing a polyamide resin, the polyamide resin having a softening point of 70°C or more and 170°C or less and a melt viscosity at 180°C of 100 mPa ·s or more and 9,000 mPa ·s or less, the polyamide resin being obtainable through condensation of a carboxylic acid component and an amine component.
<2> The material for waterproof layers according to the item <1>, wherein a content of the polyamide resin is preferably 10% by mass or more, more preferably 20% by mass or more, further preferably 30% by mass or more, further preferably 40% by mass or more, further preferably 50% by mass or more, further preferably 60% by mass or more, further preferably 70% by mass or more, further preferably 80% by mass or more, further preferably 90% by mass or more, and further preferably 95% by mass or more, and is preferably 100% by mass or less, and further preferably 100% by mass.
<3> The material for waterproof layers according to the item <1> or <2>, wherein the softening point of the polyamide resin is 70°C or more, preferably 75°C or more, and more preferably 77°C or more, and is 170°C or less, preferably 150°C or less, more preferably 130°C or less, further preferably 120°C or less, further preferably 110°C or less, further preferably 100°C or less, and further preferably 90°C or less.
<4> The material for waterproof layers according to any one of the items <1> to <3>, wherein the melt viscosity at 180°C of the polyamide resin is 100 mPa ·s or more, preferably 200 mPa ·s or more, more preferably 300 mPa ·s or more, further preferably 500 mPa ·s or more, further preferably 800 mPa ·s or more, further preferably 1,000 mPa ·s or more, further preferably 1,500 mPa ·s or more, and is 9,000 mPa ·s or less, preferably 5,000 mPa ·s or less, more preferably 4,000 mPa ·s or less, and further preferably 2,500 mPa ·s or less.
<5> The material for waterproof layers according to any one of the items <1> to <4>, wherein the material for waterproof layers contains the polyamide resin and an asphalt mixture containing an asphalt.
<6> The material for waterproof layers according to the item <5>, wherein a total content of the polyamide resin and the asphalt mixture containing the asphalt is preferably 80% by mass or more, more preferably 90% by mass or more, further preferably 95% by mass or more, and further preferably 99% by mass or more, and is preferably 100% by mass or less, and further preferably 100% by mass.
<7> The material for waterproof layers according to the item <5> or <6>, wherein a mixing ratio of the polyamide resin is 5% by mass or more based on the total mass of the polyamide resin and the asphalt mixture.
<8> The material for waterproof layers according to any one of the items <5> to <7>, wherein a mixing ratio of the polyamide resin is more preferably 10% by mass or more, further preferably 20% by mass or more, further preferably 30% by mass or more, further preferably 40% by mass or more, further preferably 50% by mass or more, further preferably 60% by mass or more, further preferably 70% by mass or more, further preferably 80% by mass or more, and further preferably 90% by mass or more based on the total mass of the polyamide resin and the asphalt mixture.
<9> The material for waterproof layers according to any one of the items <5> to <8>, wherein the asphalt mixture is a modified asphalt containing a straight asphalt having a thermoplastic elastomer added thereto.
<10> The material for waterproof layers according to any one of the items <5> to <9>, wherein a content of the thermoplastic elastomer of the asphalt mixture is preferably 3% by mass or more, more preferably 5% by mass or more, and further preferably 7% by mass or more, and is preferably 25% by mass or less, more preferably 20% by mass or less, and further preferably 15% by mass or less.
<11> The material for waterproof layers according to any one of the items <1> to <10>, wherein the carboxylic acid component contains one of a monocarboxylic acid, a dicarboxylic acid, and a polymerized fatty acid.
<12> The material for waterproof layers according to any one of the items <1> to <11>, wherein the carboxylic acid component is a combination of a monocarboxylic acid and a polymerized fatty acid.
<13> The material for waterproof layers according to the item <12>, wherein mixing ratios of the monocarboxylic acid and the polymerized fatty acid are 0% by molar equivalent or more and 50% by molar equivalent or less for the monocarboxylic acid and preferably 50% by molar equivalent or more and 100% by molar equivalent or less for the polymerized fatty acid, more preferably 0% by molar equivalent or more and 35% by molar equivalent or less for the monocarboxylic acid and 65% by molar equivalent or more and 100% by molar equivalent or less for the polymerized fatty acid, further preferably 0% by molar equivalent or more and 20% by molar equivalent or less for the monocarboxylic acid and 80% by molar equivalent or more and 100% by molar equivalent or less for the polymerized fatty acid, further preferably 5% by molar equivalent or more and 18% by molar equivalent or less for the monocarboxylic acid and 82% by molar equivalent or more and 95% by molar equivalent or less for the polymerized fatty acid, and further preferably 6% by molar equivalent or more and 15% by molar equivalent or less for the monocarboxylic acid and 85% by molar equivalent or more and 94% by molar equivalent or less for the polymerized fatty acid, based on the total amount of the carboxylic acid component.
<14> The material for waterproof layers according to any one of the items <1> to <13>, wherein the amine component is preferably two or more kinds of polyamines, more preferably two or more kinds of aromatic or aliphatic diamines, and further preferably two or more kinds of aliphatic diamines.
<15> The material for waterproof layers according to any one of the items <1> to <14>, wherein the amine component preferably contains 50% by molar equivalent or more and 100% by molar equivalent or less of an aliphatic diamine and 0% by molar equivalent or more and 10% by molar equivalent or less of an aromatic diamine, based on the total amount of the amine component.
<16> The material for waterproof layers according to item <14> or <15>, wherein the aliphatic diamine used is an aliphatic diamine having a number of carbon atoms of from 2 to 6.
<17> The material for waterproof layers according to any one of the items <14> to <16>, wherein the aliphatic diamine used is ethylenediamine and hexamethylenediamine.
<18> The material for waterproof layers according to item <17>, wherein amounts of ethylenediamine and hexamethylenediamine are preferably 30% by molar equivalent or more and 70% by molar equivalent or less for ethylenediamine and 30% by molar equivalent or more and 70% by molar equivalent or less for hexamethylenediamine, and more preferably 40% by molar equivalent or more and 60% by molar equivalent or less for ethylenediamine and 40% by molar equivalent or more and 60% by molar equivalent or less for hexamethylenediamine, based on the total amount of the amine component.
<19> The material for waterproof layers according to any one of the items <1> to <18>, wherein the polyamide resin is obtainable through condensation performed by mixing the carboxylic acid component and the amine component at a molar equivalent ratio (carboxylic acid group/amino group) of from 1.0/1.2 to 1.2/1.0, and heating to a temperature of from 180 to 250°C.
<20> The material for waterproof layers according to any one of the items <1> to <19>, wherein the material for waterproof layers preferably has a softening point of 70°C or more, more preferably 75°C or more, and further preferably 77°C or more, and preferably 170°C or less, more preferably 150°C or less, further preferably 130°C or less, further preferably 120°C or less, further preferably 110°C or less, further preferably 100°C or less, and further preferably 90°C or less.
<21> The material for waterproof layers according to any one of the items <1> to <20>, wherein the material for waterproof layers preferably has a melt viscosity at 180°C of 100 mPa ·s or more, more preferably 200 mPa ·s or more, further preferably 300 mPa ·s or more, further preferably 500 mPa ·s or more, further preferably 800 mPa ·s or more, further preferably 1,000 mPa ·s or more, further preferably 1,500 mPa ·s or more, and preferably 9,000 mPa ·s or less, more preferably 5,000 mPa ·s or less, further preferably 4,000 mPa ·s or less, and further preferably 2,500 mPa ·s or less.
<22> The material for waterproof layers according to any one of the items <1> to <21>, wherein the material for waterproof layers is disposed between a floor slab of a road bridge and a pavement mixture constructed on the floor slab so as to form a waterproof layer.
<23> A method for forming a waterproof layer, containing disposing the material for waterproof layers according to any one of the items <1> to <22> between a floor slab of a road bridge and a pavement mixture constructed on the floor slab.
<24> The method for forming a waterproof layer according to the item <23>, wherein an amount of the material for waterproof layers coated on the floor slab is 0.5 kg/m² or more and 5.0 kg/m² or less, and more preferably 3.0 kg/m² or less.
<25> Use of the material for waterproof layers according to any one of the items <1> to <22>, containing disposing the material for waterproof layers between a floor slab of a road bridge and a pavement mixture constructed on the floor slab.

### Examples

The present invention will be described in more detail with reference to examples below. The present invention is not limited to the examples.

### [Production Polyamide Resins]

### <Polyamide Resin A>

The polyamide resin A is obtained through condensation of a carboxylic acid component containing propionic acid and a polymerized fatty acid (Haridimer 250, produced by Harima Chemicals Group, Inc.) and an amine component containing ethylenediamine and m-xylylenediamine. The polyamide resin A was synthesized according to the production method described in [0032] of Japanese Patent No. 4,580,457.

Specifically, a mixture of the carboxylic acid component containing propionic acid and a polymerized fatty acid and the amine component as a raw material was placed in a four-neck round-bottom flask equipped with a thermometer, an agitation system, a dehydration tube, and a nitrogen blowing tube, and the mixture was agitated, and after flowing a slight amount of nitrogen for preventing coloration thereof, was reacted at 210°C for 3 hours. The mixture was further reacted under reduced pressure (13.3 kPa) for 2 hours, and then cooled and pulverized, thereby providing the polyamide resin A.

The content ratios are as follows. For the carboxylic acid component, the amount of propionic acid is 0.20 molar equivalent (10% by molar equivalent in terms of ratio based on the total raw materials, which is the same hereinafter in the parentheses), and the amount of the polymerized fatty acid is 0.80 molar equivalent (40% by molar equivalent), per 1 molar equivalent of the carboxylic acid component, and for the amine component, the amount of ethylenediamine is 0.27 molar equivalent (13% by molar equivalent), and the amount of m-xylylenediamine is 0.73 molar equivalent (37% by molar equivalent), per 1 molar equivalent of the amine component. The ratio of the carboxylic acid component and the amine component in terms of molar equivalent ratio (carboxylic acid component/amine component) is 1.0/1.0.

The polyamide resin A had a softening point of 68°C and a 180°C melt viscosity of 300 mPa ·s. The molar equivalent of the tall oil fatty acid and the polymerized fatty acid was calculated from the measurement result of the acid value by the ordinary method according to JIS, which was the same hereinafter.

### <Polyamide Resin B>

The polyamide resin B was obtained in the same manner as in the polyamide resin A except that a tall oil fatty acid was used instead of propionic acid, and hexamethylenediamine was used instead of m-xylylenediamine.

The content ratios are as follows. For the carboxylic acid component, the amount of the tall oil fatty acid is 0.03 molar equivalent (1% by molar equivalent), and the amount of the polymerized fatty acid is 0.97 molar equivalent (49% by molar equivalent), per 1 molar equivalent of the carboxylic acid component, and for the amine component, the amount of ethylenediamine is 0.50 molar equivalent (25% by molar equivalent), and the amount of hexamethylenediamine is 0.50 molar equivalent (25% by molar equivalent), per 1 molar equivalent of the amine component. The ratio of the carboxylic acid component and the amine component in terms of molar equivalent ratio (carboxylic acid component/amine component) is 1.0/1.0.

The polyamide resin B had a softening point of 82°C and a 180°C melt viscosity of 10,000 mPa ·s.

### <Polyamide Resin C>

The polyamide resin C was obtained in the same manner as in the polyamide resin A except that a tall oil fatty acid was used instead of propionic acid, and hexamethylenediamine was used instead of m-xylylenediamine.

The content ratios are as follows. For the carboxylic acid component, the amount of the tall oil fatty acid is 0.05 molar equivalent (3% by molar equivalent), and the amount of the polymerized fatty acid is 0.95 molar equivalent (47% by molar equivalent), per 1 molar equivalent of the carboxylic acid component, and for the amine component, the amount of ethylenediamine is 0.50 molar equivalent (25% by molar equivalent), and the amount of hexamethylenediamine is 0.50 molar equivalent (25% by molar equivalent), per 1 molar equivalent of the amine component. The ratio of the carboxylic acid component and the amine component in terms of molar equivalent ratio (carboxylic acid component/amine component) is 1.0/1.0.

The polyamide resin C had a softening point of 80°C and a 180°C melt viscosity of 3,300 mPa ·s.

### <Polyamide Resin D>

The polyamide resin D was obtained in the same manner as in the polyamide resin A except that propionic acid and a tall oil fatty acid were used in combination, and m-xylylenediamine was not used.

The content ratios are as follows. For the carboxylic acid component, the amount of the tall oil fatty acid is 0.04 molar equivalent (2% by molar equivalent), the amount of propionic acid is 0.10 molar equivalent (6% by molar equivalent), and the amount of the polymerized fatty acid is 0.86 molar equivalent (42% by molar equivalent), per 1 molar equivalent of the carboxylic acid component, and for the amine component, the amount of ethylenediamine is 1.00 molar equivalent (50% by molar equivalent) per 1 molar equivalent of the amine component. The ratio of the carboxylic acid component and the amine component in terms of molar equivalent ratio (carboxylic acid component/amine component) is 1.0/1.0.

The polyamide resin D had a softening point of 125°C and a 180°C melt viscosity of 1,400 mPa ·s.

### <Polyamide Resin E>

The polyamide resin E was obtained in the same manner as in the polyamide resin A except that a carboxylic acid component containing a tall oil fatty acid and a polymerized fatty acid (Haridimer 250, produced by Harima Chemicals Group, Inc.), and an amine component containing ethylenediamine and hexamethylenediamine were subjected to condensation.

The content ratios are as follows. For the carboxylic acid component, the amount of the tall oil fatty acid is 0.07 molar equivalent (4% by molar equivalent), and the amount of the polymerized fatty acid is 0.93 molar equivalent (46% by molar equivalent), per 1 molar equivalent of the carboxylic acid component, and for the amine component, the amount of ethylenediamine is 0.50 molar equivalent (25% by molar equivalent), and the amount of hexamethylenediamine is 0.50 molar equivalent (25% by molar equivalent), per 1 molar equivalent of the amine component. The ratio of the carboxylic acid component and the amine component in terms of molar equivalent ratio (carboxylic acid component/amine component) is 1.0/1.0.

The polyamide resin E had a softening point of 82°C and a 180°C melt viscosity of 1,900 mPa ·s.

### <Polyamide Resin F>

The polyamide resin F was obtained in the same manner as in the polyamide resin A except that a tall oil fatty acid was used instead of propionic acid, and hexamethylenediamine was used instead of m-xylylenediamine.

The content ratios are as follows. For the carboxylic acid component, the amount of the tall oil fatty acid is 0.32 molar equivalent (16% by molar equivalent), and the amount of the polymerized fatty acid is 0.68 molar equivalent (34% by molar equivalent), per 1 molar equivalent of the carboxylic acid component, and for the amine component, the amount of ethylenediamine is 0.50 molar equivalent (25% by molar equivalent), and the amount of hexamethylenediamine is 0.50 molar equivalent (25% by molar equivalent), per 1 molar equivalent of the amine component. The ratio of the carboxylic acid component and the amine component in terms of molar equivalent ratio (carboxylic acid component/amine component) is 1.0/1.0.

The polyamide resin F had a softening point of 80°C and a 180°C melt viscosity of 75 mPa ·s.

### <Polyamide Resin G>

The polyamide resin G was obtained in the same manner as in the polyamide resin A except that a carboxylic acid component containing a tall oil fatty acid, adipic acid, and a polymerized fatty acid (Haridimer 250, produced by Harima Chemicals Group, Inc.), and an amine component containing ethylenediamine and m-xylylenediamine were subjected to condensation.

The content ratios are as follows. For the carboxylic acid component, the amount of the tall oil fatty acid is 0.02 molar equivalent (1% by molar equivalent), the amount of the polymerized fatty acid is 0.78 molar equivalent (39% by molar equivalent), and the amount of adipic acid is 0.20 molar equivalent (10% by molar equivalent), per 1 molar equivalent of the carboxylic acid component, and for the amine component, the amount of ethylenediamine is 0.87 molar equivalent (43.5% by molar equivalent), and the amount of m-xylylenediamine is 0.13 molar equivalent (6.5% by molar equivalent), per 1 molar equivalent of the amine component. The ratio of the carboxylic acid component and the amine component in terms of molar equivalent ratio (carboxylic acid component/amine component) is 1.0/1.0.

The polyamide resin G had a softening point of 172°C and a 180°C melt viscosity of 1,300 mPa ·s.

### [Evaluation Methods]

The materials for waterproof layers of Examples and Comparative Examples were evaluated according to the following methods. A part of the evaluation methods was performed based on the basic check method described in p. 35 of Handbook for Road Bridge Floor Slab Waterproofing (published by Japan Road Association, March of Heisei 19 (2007)).

### <Softening Point Test>

The softening point was measured by the ring and ball method shown in "JIS K2207:2006 Petroleum Asphalt".

### <Melt Viscosity>

The melt viscosity was measured for the polyamide resin as a single material and the material for waterproof layers according to "The Japan Petroleum Institute Standard JPI-5s-54-99: Asphalt, Viscosity Test Method with Rotating Viscometer" at a test temperature of 180°C.

### <Shear Test of Material for Waterproof Layers>

Two sheets of slate plates each having a width of 5 cm, a length of 10 cm, and a thickness of 3 mm were prepared, and heated in a thermostat chamber at 180°C for 1 hour. One of the slate plates was taken out from the thermostat chamber, and before the temperature thereof began to be lowered, the material for waterproof layers having been melted by heating to 180°C was coated on the half area of 5 cm × 5 cm of the slate plate to a thickness of 1 mm. Immediately thereafter, the other one of the slate plates was taken out from the thermostat chamber and adhered thereto to produce a specimen.

The specimen was once cooled to room temperature, and then aged in a thermostat chamber at 60°C for 3 hours. Thereafter, the both ends of the slate plates having no material for waterproof layers coated thereon were held with the chucks of the tensile tester, and pulled at a speed of 10 mm/min to shear the material for waterproof layers. The load peak value of the resulting load-displacement curve was divided by shear area (25 cm²) to calculate the maximum shear stress. The maximum shear stress thus calculated was designated as the shear strength at 60°C. A specimen having a shear strength at 60°C of 0.10 MPa or more is preferred.

### <Evaluation of Construction Suitability>

In the production of the specimen for evaluating the waterproof layer in Examples and Comparative Examples, the construction suitability was evaluated by a sensory test of the operator who coated the material for waterproofing while leveling with a metal spatula, according to the following standard.
G: capable of leveled coating
F: difficult in leveled coating

### <Waterproof Test II>

The waterproof test was performed according to the method shown in pp. 117 to 121 of Handbook for Road Bridge Floor Slab Waterproofing (published by Japan Road Association, March of Heisei 19 (2007)).

### <Shear Test>

The shear test was performed according to the method shown in pp. 132 to 134 of Handbook for Road Bridge Floor Slab Waterproofing (published by Japan Road Association, March of Heisei 19 (2007)). The test temperature was -10°C described in the handbook. The strength at -10°C is preferably 0.8 MPa or more, and the displacement at -10°C is preferably 0.5 mm or more.

### [Examples and Comparative Examples]

Materials for waterproof layers of Examples and Comparative Examples were produced with the polyamide resins A to G obtained above and an asphalt mixture while changing the kinds thereof.

Specifically, on a concrete slab having a length of 30 cm, a width of 30 cm, and a thickness of 6 cm, an epoxy resin-based primer (Model EP-29, produced by Cemedine Co., Ltd.) was coated to 0.3 kg/m², silica sand was spread thereon to 1 kg/m² before curing the primer, and then the primer was cured. Thereafter, the material for waterproof layers having been heated to 180°C was coated thereon (1.5 kg/m²) while leveling with a metal spatula to form a waterproof layer, which was allowed to stand to room temperature.

In the case where the polyamide resin and an asphalt mixture were used as the material for waterproof layers, the polyamide resin and the asphalt mixture were mixed with a mixer at 180°C, and then used. The asphalt mixture used was a commercially available product ("Asphalt Coated Film Waterproof Agent, Toughseal", produced by Toa Road Corporation) containing an SBS thermoplastic elastomer as a modifier in an amount of 12% by mass based on the total mass of the asphalt mixture.

Subsequently, a dense graded asphalt concrete using a modified asphalt type II as a binder was leveled off at a temperature of 150°C on the waterproof layer, so as to form a layer having a thickness of 4 cm.

The resulting specimens were evaluated by the aforementioned evaluation methods. The results are shown in Table 1.

**Table 1**

| | | | Test temperature | Unit | Example | | | | | | Comparative Example | | | | |
|---|---|---|---|---|---|---|---|---|---|---|---|---|---|---|---|
| | | | | | 1 | 2 | 3 | 4 | 5 | 6 | 1 | 2 | 3 | 4 | 5 |
| | Polyamide resin A (68, 300) *1 | | - | % by mass | - | - | - | - | - | - | - | 100 | - | - | - |
| | Polyamide resin B (82, 10000) *1 | | - | % by mass | - | - | - | - | - | - | - | - | 100 | - | - |
| | Polyamide resin C (80, 3300) *1 | | - | % by mass | - | - | - | - | - | 100 | | | | | |
| Mixing formulation | Polyamide resin D (125, 1400) *1 | | - | % by mass | 100 | - | - | - | - | - | - | - | - | - | - |
| (% by mass) | Polyamide resin E (82, 1900) *1 | | - | % by mass | - | 100 | 50 | 20 | 10 | - | - | - | - | - | - |
| Kind of resin | Polyamide resin F (80, 75) *1 | | - | % by mass | - | - | - | - | - | - | - | - | - | 100 | - |
| | Polyamide resin G (172,1300) *1 | | - | % by mass | - | - | - | - | - | - | - | - | - | | 80 |
| | Asphalt mixture | | - | % by mass | - | - | 50 | 80 | 90 | - | 100 | - | - | - | 20 |
| Properties of material for waterproof layers | Softening point | | - | °C | 125 | 82 | 101 | 108 | 109 | 80 | 111 | 68 | 82 | 80 | 157 |
| | Melt viscosity | | 180°C | mPa·s | 1400 | 1900 | 780 | 630 | 600 | 3300 | 500 | 300 | 10000 | 75 | 1240 |
| | Construction suitability | | 200°C | - | G | G | G | G | G | G | G | G | F | G | G |
| | Waterproof test II | | 23°C | - | no water leak | no water leak | no water leak | no water leak | no water leak | no water leak | no water leak | no water leak | water leak found | no water leak | no water leak |
| Evaluation results | Shear test | Strength | -10°C | MPa | 1.1 | 2.6 | 2.2 | 1.9 | 1.6 | 2.0 | 1.2 | 2.2 | 2.0 | 0.2 | 0.7 |
| | | Displacement | | mm | 0.6 | 2.3 | 1.9 | 1.3 | 0.9 | 1.9 | 0.6 | 2.1 | 2.0 | 0.3 | 0.4 |
| | Shear test for material for waterproof layers Maximum shear strength | | 60°C | MPa | 0.40 | 0.35 | 0.21 | 0.14 | 0.11 | 0.33 | 0.03 | 0.02 | 0.15 | 0.29 | 0.27 |

| | | | | | | | | | | | | | | | |
|---|---|---|---|---|---|---|---|---|---|---|---|---|---|---|---|
| *1: The numerals in parentheses show the softening point (°C) and the melt viscosity (mPa·s) at 180°C from the left. | | | | | | | | | | | | | | | |

It is understood from the comparison of Examples 1, 2, and 6 and Comparative Example 1 that Example 2, which is the material for waterproof layers containing the polyamide resin having a softening point of 82°C and a melt viscosity at 180°C of 1,900 mPa ·s, is excellent in balance between the shear strength at a low temperature and the shear strength at a high temperature.

Example 1 is an example using only one kind of the aliphatic diamine for the amine component as the raw material of the polyamide resin, and it is understood that Examples 2 to 6 using two kinds of the aliphatic diamines therefor have a larger shear strength at a low temperature than Example 1.

It is understood that Comparative Example 2, which is the material for waterproof layers containing the polyamide resin having a softening point of less than 70°C, has a lowered shear strength at a high temperature.

It is understood that Comparative Example 3, which is the material for waterproof layers containing the polyamide resin having a melt viscosity at 180°C exceeding 9,000 mPa ·s, has a deteriorated construction suitability and causes water leak. It is considered that this is because a uniform coated film of a waterproof layer cannot be formed in the construction process.

It is understood that Comparative Example 4, which is the material for waterproof layers containing the polyamide resin having a melt viscosity at 180°C of less than 100 mPa ·s, has a lowered shear strength at a low temperature.

It is understood that Comparative Example 5, which is the material for waterproof layers containing the polyamide resin having a softening point exceeding 170°C, has a lowered shear strength at a low temperature. It is considered that this is because the waterproof layer is not sufficiently melted with the heat of the asphalt mixture constructed thereon, so as to exhibit an insufficient adhesion force.

## Claims

1. A material for waterproof layers used for a waterproof layer of a construction, the material for waterproof layers, comprising a polyamide resin,
the polyamide resin having a softening point of 70°C or more and 170°C or less and a melt viscosity at 180°C of 100 mPa ·s or more and 9,000 mPa ·s or less, the polyamide resin being obtainable through condensation of a carboxylic acid component and an amine component.

2. The material for waterproof layers according to claim 1, wherein the material for waterproof layers comprises the polyamide resin and an asphalt mixture containing an asphalt.

3. The material for waterproof layers according to claim 2, wherein a mixing ratio of the polyamide resin is 5% by mass or more based on the total mass of the polyamide resin and the asphalt mixture.

4. The material for waterproof layers according to claim 2, wherein the asphalt mixture is a modified asphalt containing a straight asphalt having a thermoplastic elastomer added thereto.

5. The material for waterproof layers according to any one of claims 1 to 4, wherein the material for waterproof layers has a softening point of 70°C or more and 170°C or less, and the material for waterproof layers has a melt viscosity at 180°C of 100 mPa ·s or more and 9,000 mPa ·s or less.

6. The material for waterproof layers according to any one of claims 1 to 5, wherein the carboxylic acid component comprises 5% by molar equivalent or more and 18% by molar equivalent or less of a monocarboxylic acid and 82% by molar equivalent or more and 95% by molar equivalent or less of a polymerized fatty acid, based on the total amount of the carboxylic acid component.

7. The material for waterproof layers according to any one of claims 1 to 6, wherein the amine component comprises 50% by molar equivalent or more and 100% by molar equivalent or less of an aliphatic diamine and 0% by molar equivalent or more and 20% by molar equivalent or less of an aromatic diamine, based on the total amount of the amine component.

8. The material for waterproof layers according to any one of claims 1 to 7, wherein the material for waterproof layers is disposed between a floor slab of a road bridge and a pavement mixture constructed on the floor slab so as to form a waterproof layer.

9. A method for forming a waterproof layer, comprising disposing the material for waterproof layers according to any one of claims 1 to 7 between a floor slab of a road bridge and a pavement mixture constructed on the floor slab.

10. Use of the material for waterproof layers according to any one of claims 1 to 7, comprising disposing the material for waterproof layers between a floor slab of a road bridge and a pavement mixture constructed on the floor slab.
